# EUROPEAN PATENT APPLICATION

(11) **EP 4 478 498 A1**
(43) Date of publication of application: **18.12.2024**
(21) Application number: 24177099.9
(22) Date of filing: 21.05.2024
(51) Int. Cl.: H01M 50/176, H01M 50/55, H01M 50/553

(54) **ELECTRICITY STORAGE DEVICE**

(30) Priority: 15.06.2023 JP 2023098339
(71) Applicant: Prime Planet Energy & Solutions, Inc., Chuo-ku Tokyo 103-0022 (JP)
(72) Inventor: YOKOYAMA, Yoshinori, Tokyo, 103-0022 (JP); OSHIMA, Kazuki, Tokyo, 103-0022 (JP)
(74) Representative: Kuhnen & Wacker Patent- und Rechtsanwaltsbüro PartG mbB

(57) **Abstract**

An electricity storage device (100) disclosed herein includes: an exterior body (12) having an opening (12h); a closing plate (14) closing the opening (12h); an electrode terminal (30, 40) having one end electrically connected to an electrode body (20) inside the exterior body (12) and the other end exposed outside the closing plate (14); and an insulating member (50) made of resin and insulating the electrode terminal (30, 40) from an outer surface (14A) of the closing plate (14). The closing plate (14), the electrode terminal (30, 40), and the insulating member (50) are insert-molded, the closing plate (14) has a groove (14t) at a boundary portion with the insulating member (50) on the outer surface (14A) side, and the groove (14t) is provided over an entire periphery of the electrode terminal (30, 40).

## Description

### BACKGROUND OF THE DISCLOSURE

### 1. Field

The present disclosure relates to electricity storage devices.

### 2. Background

So-called electricity storage devices, including secondary batteries such as lithium ion secondary batteries and capacitors such as lithium ion capacitors, are widely used as portable power sources for PCs and mobile terminals, as well as power sources for driving vehicles such as electric vehicles (BEVs), hybrid electric vehicles (HEVs), and plug-in hybrid electric vehicles (PHEVs).

As one example of this type of electricity storage device, there is an electricity storage device in which an electrode body with a predetermined shape is connected to a member provided by integrating a closing plate, electrode terminals, and an insulating member through insert-molding in advance (hereinafter referred to as a "closing plate assembly"), and this electrode body with the closing plate assembly is housed in an exterior body. Such an electricity storage device can be manufactured by housing the exterior body in the exterior body and then welding an opening part of the exterior body and the closing plate together. The closing plate assembly is manufactured by inserting the electrode terminals into terminal insertion holes, pouring molten resin in a state of setting the closing plate and the electrode terminals in a mold, followed by cooling. For example, Japanese Patent Application Publication No. 2021-086813 describes an example of a sealed electricity storage device (lithium ion secondary battery) manufactured using an integrally molded member.

### SUMMARY

According to the results of the inventors' studies, when respective members including electrode terminals and a closing plate are set in the mold during insert-molding, there occurs a small gap due to part tolerances. Molten resin tends to flow into such a small gap and leak out to unintended places, causing a resin burr (also simply referred to as a "burr") after cooling. It has been found out that molten resin tends to leak out to unintended places, especially, between the electrode terminal and the terminal insertion hole of the closing plate, causing burrs over a wide area even though the electrode terminal and the like are fixed in the mold. If such a burr is present, the burr may burn when welding the closing plate and the exterior body, and furthermore, the insulating member may also burn.

The present disclosure has been made in view of the above circumstances, and its purpose is to provide an electricity storage device with suitably improved safety.

An electricity storage device disclosed herein includes: an electrode body including a positive electrode and a negative electrode; a case having an opening and housing the electrode body therein; a closing plate having a terminal insertion hole and closing the opening; an electrode terminal having one end electrically connected to the electrode body inside the case and the other end inserted into the terminal insertion hole and exposed outside the closing plate; and a resin insulating member insulating the electrode terminal from an outer surface of the closing plate. The closing plate, the electrode terminal, and the insulating member are insert-molded, the closing plate has a groove at a boundary portion with the insulating member on the outer surface side, and the groove is provided over an entire periphery of the electrode terminal.

With this configuration, burrs can be prevented from occurring on the outer surface of the closing plate, excluding the groove. Thus, the insulating member can be suitably prevented from being burnt, thereby providing an electricity storage device with more safety.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a partial cross-sectional view schematically illustrating a battery according to one embodiment.
FIG. 2 is an exploded perspective view of FIG. 1.
FIG. 3 is a schematic plan view of a closing plate of FIG. 1.
FIG. 4 is a schematic cross-sectional view of the vicinity of a negative electrode terminal.
FIG. 5 is a perspective view showing the vicinity of the negative electrode terminal.
FIG. 6 is a diagram schematically illustrating how an injection molding step is performed according to one embodiment.

### DETAILED DESCRIPTION OF THE PREFERRED EMBODIMENTS

Preferred embodiments of the technology disclosed herein will be described below with reference to accompanying drawings. Matters that are necessary for carrying out the technology disclosed herein but are not specifically mentioned herein (e.g., general battery structures and manufacturing processes that do not characterize the technology disclosed herein) may be understood by those skilled in the art as design matters based on conventional technologies in the relevant field. The technology disclosed herein may be carried out on the basis of the contents disclosed herein and common technical knowledge in the relevant field. In the following, members and parts having the same functions are identified by the same reference signs, and description thereof may be simplified or omitted when deemed redundant. In the following explanations, signs L, R, F, Rr, U, and D in the drawings represent left, right, front, rear, top, and bottom, respectively. In addition, sign X in the drawings indicates a "short side direction of the electricity storage device", sign Y indicates a "long side direction of the electricity storage device", and sign Z indicates a "height direction of the electricity storage device". However, these are only directions for convenience of explanation and do not limit the installation form of an electricity storage device 100 in any way. In the present specification, the notation "A to B" indicative of a range means "A or more and B or less".

In the present specification, the term "electricity storage device" refers to a general device that can be repeatedly charged and discharged by the movement of charge carriers between a positive electrode and a negative electrode through an electrolyte. The concept of the electricity storage device encompasses secondary batteries such as lithium ion secondary batteries and nickel-metal hydride batteries, and capacitors such as lithium ion capacitors and electrical double layer capacitors.

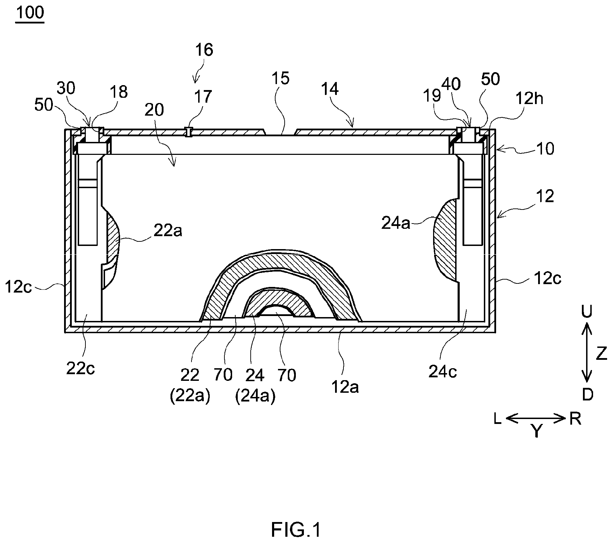

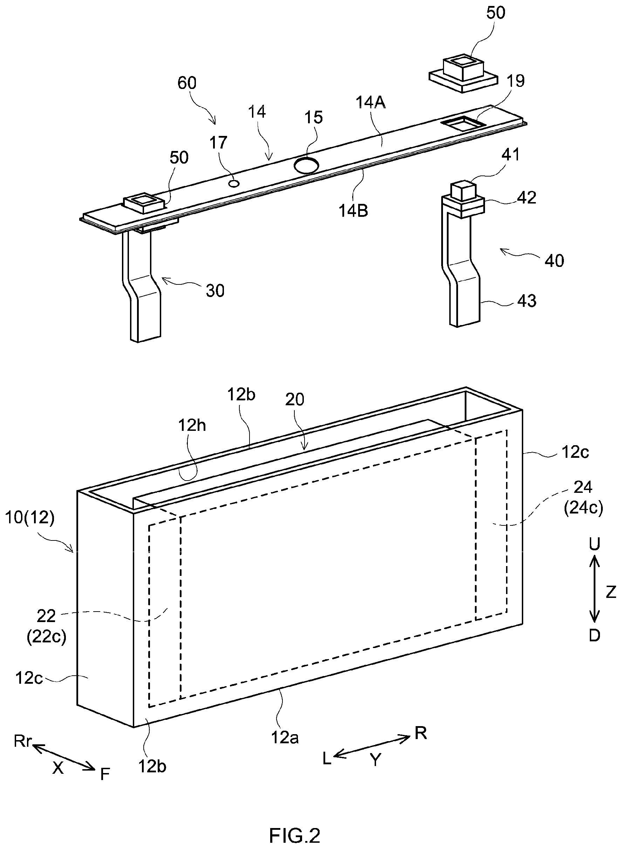

FIG. 1 is a partial cross-sectional view of the electricity storage device 100. FIG. 2 is a schematic exploded perspective view of the electricity storage device 100. As illustrated in FIGS. 1 and 2, the electricity storage device 100 includes a case 10, an electrode body 20, a positive electrode terminal 30, a negative electrode terminal 40, and an insulating member 50. The positive electrode terminal 30 and/or the negative electrode terminal 40 are examples of the electrode terminals. Although not illustrated in the drawings, the electricity storage device 100 here further includes an electrolyte. The electricity storage device 100 is preferably a secondary battery, and more preferably a nonaqueous electrolyte secondary battery such as a lithium ion secondary battery, for example.

The case 10 includes an exterior body 12 and a closing plate 14. The exterior body 12 and the closing plate 14 are examples of case members constituting the case 10. The case 10 here has a flat cuboidal (rectangular) outer shape. The case 10 is integrated, for example, by joining (e.g., welding) the closing plate 14 to the periphery of an opening 12h of the exterior body 12. The exterior body 12 and the closing plate 14 are formed of, for example, aluminum or an aluminum alloy.

The exterior body 12 is a housing that houses the electrode body 20 and the electrolyte therein. The exterior body 12 is a bottomed rectangular container having the opening 12h on its top surface. The opening 12h has a substantially rectangular shape. As illustrated in FIGS. 1 and 2, the exterior body 12 has a bottom wall 12a, a pair of long side walls 12b extending from the bottom wall 12a and facing each other, and a pair of short side walls 12c extending from the bottom wall 12a and facing each other. The bottom wall 12a has a substantially rectangular shape. The bottom wall 12a faces the opening 12h.

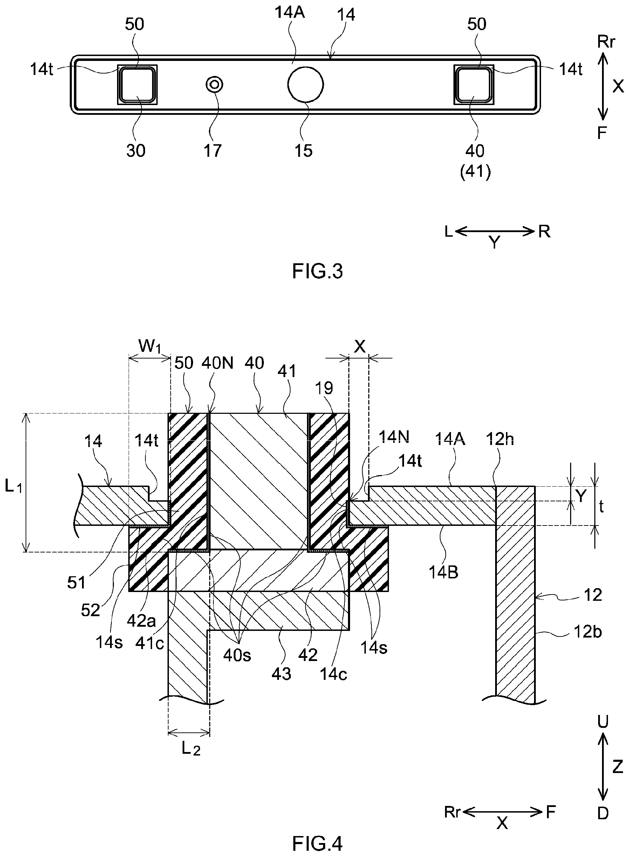

FIG. 3 is a schematic plan view of the closing plate 14. The closing plate 14 is a plate-shaped member that closes the opening 12h of the exterior body 12. The closing plate 14 has a substantially rectangular shape in planar view as illustrated in FIG. 3. The size of the closing plate is not particularly limited because it can be changed as appropriate according to the desired battery capacity and the like. As an example, the length of the closing plate 14 in the short side direction X may be about 10 mm or more and about 50 mm or less (preferably 20 mm or more and 40 mm or less), whereas the length of the closing plate 14 in the long side direction Y may be about 100 mm or more and about 450 mm or less (preferably 120 mm or more and 400 mm or less). The thickness (length in the up-down direction Z) of the closing plate 14 is preferably 0.3 mm or more and 2 mm or less, and may be 0.5 mm or more and 1.5 mm or less. The closing plate 14 faces the bottom wall 12a of the exterior body 12. As illustrated in FIG. 2, the closing plate 14 has an outer surface 14A oriented toward the outside and located outside the case 10 in a state of closing the opening 12h, and an inner surface 14B oriented toward the inside of the electricity storage device 100 and facing the electrode body 20. The closing plate 14 has terminal insertion holes 18 and 19 that pass through the outer surface 14A and the inner surface 14B (see FIG. 1). The terminal insertion holes 18 and 19 are provided at both end portions of the closing plate 14 in the long side direction Y Here, the terminal insertion hole 18 is for the positive electrode terminal 30, whereas the terminal insertion hole 19 is for the negative electrode terminal 40. The closing plate 14 is provided with a gas discharge valve 15 and a pouring hole 16 for injecting the electrolyte. The gas discharge valve 15 is a thin-walled portion configured to break when the pressure in the case 10 reaches a predetermined value or higher, thereby discharging the gas in the case 10 to the outside. The pouring hole 16 is sealed with a sealing member 17.

In the case 10, the electrolyte can be housed, together with the electrode body 20 as described above. As the electrolyte, any conventionally known electrolyte used in batteries can be used without restriction. As an example, a nonaqueous electrolyte in which a supporting salt is dissolved in a nonaqueous solvent can be used. Examples of nonaqueous solvents include carbonate solvents such as ethylene carbonate, dimethyl carbonate, and ethyl methyl carbonate. An example of a supporting salt is a fluorine-containing lithium salt such as LiPF₆.

As illustrated in FIG. 2, the electricity storage device 100 has a closing plate assembly 60. The closing plate assembly 60 is an assembly component in which the electrode terminals (positive electrode terminal 30 and negative electrode terminal 40) and the insulating member 50 are insert-molded (integrally molded) and assembled to the closing plate 14. Each of the electrode terminals is firmly fixed to the closing plate 14 by the insulating member 50. Thus, the electrode terminals are assembled to the closing plate 14 without being crimped. The electrode terminals are fixed to the closing plate 14 by the insulating member 50 without directly contacting the closing plate 14. The adhesion of the closing plate 14 and the electrode terminals to the insulating member 50 allows the terminal insertion holes 18 and 19 to be sealed by the insulating member 50. That is, the electrode terminals are fixed to the closing plate 14 by the insulating member 50, while rendering them immobile.

As illustrated in FIG. 1, the electrode body 20 is housed inside the exterior body 12. The electrode body 20 is housed inside the exterior body 12, for example, while being covered with an insulating film not illustrated. The electrode body 20 is a wound electrode body provided by placing strip-shaped positive and negative electrode sheets 22 and 24 on top of another while insulating them with two strip-shaped separator sheets 70 interposed therebetween, and winding the positive and negative electrode sheets 22 and 24 and the separator sheets around the winding axis of the electrode body 20 in the long side direction. However, the electrode body 20 may be a stacked electrode body including quadrangular positive and negative electrodes stacked on top of another with a rectangular separator sheet interposed therebetween. Alternatively, it may be a concertina-folded stacked electrode body composed of a plurality of positive electrode sheets and a plurality of negative electrode sheets, with each electrode sheet sandwiched in a concertina-folded separator sheet.

The positive electrode sheet 22 includes: a strip-shaped positive electrode current collector 22c; and a positive electrode active material layer 22a fixed onto at least one of the surfaces of the positive electrode current collector 22c (see FIG. 1). Conventionally known materials that can be used in general batteries (e.g., in lithium ion secondary batteries) can be utilized in each member constituting the positive electrode sheet 22 without particular restrictions. The positive electrode current collector 22c is preferably made of conductive metal such as aluminum, aluminum alloys, nickel, or stainless steel, for example. The positive electrode active material layer 22a contains a positive electrode active material that is capable of reversibly storing and releasing charge carriers (e.g., a lithium transition metal composite oxide such as lithium nickel cobalt manganese composite oxide). It should be noted that the positive electrode active material layer 22a may additionally contain optional components other than the positive electrode active material, such as conductive materials, binders, and various additive components.

A negative electrode sheet 24 includes: a strip-shaped negative electrode current collector 24c; and a negative electrode active material layer 24a fixed onto at least one of the surfaces of the negative electrode current collector 24c (see FIG. 1). Conventionally known materials that can be used in general batteries (e.g., in lithium ion secondary batteries) can be utilized in each member constituting the negative electrode sheet 24 without particular restrictions. The negative electrode current collector 24c is preferably made of conductive metal such as copper, copper alloys, nickel, or stainless steel, for example. The negative electrode active material layer 24a contains a negative electrode active material that is capable of reversibly storing and releasing charge carriers (e.g., carbon material such as graphite). It should be noted that the negative electrode active material layer 24a may additionally contain optional components other than the negative electrode active material, such as conductive materials, binders, dispersants, and various additive components.

A separator sheet 70 is an insulating sheet with a plurality of fine through holes through which the charge carriers can pass. The separator sheet 70 is composed of, for example, a porous resin base material. Examples of the resin base material include sheets (films) made of resins, including polyolefins such as polyethylene (PE) and polypropylene (PP), polyesters, polyamides, cellulose, and the like. The separator sheet 70 may have a single-layer structure or a structure in which two or more porous resin sheets of different properties and characteristics (in terms of thickness, porosity, etc. ) are stacked (e.g., a three-layer structure with a PP layer stacked on both sides of a PE layer). The separator sheet 70 may also have, on its surface, a heat resistant layer (HRL layer) composed of ceramic particles or the like.

As illustrated in FIG. 1, the electrode body 20 housed inside the exterior body 12 is arranged such that one end of the positive electrode current collector 22c is near the left end of the electricity storage device 100 in the long side direction Y, and such that one end of the negative electrode current collector 24c is near the right end of the electricity storage device 100 in the long side direction Y The positive electrode terminal 30 is attached to one end portion of a closing plate 14 in the long side direction Y (left end portion in FIG. 1). The negative electrode terminal 40 is attached to the other end portion of the closing plate 14 in the long side direction Y (right end portion in FIG. 1). In the electricity storage device 100, each of the positive and negative electrode terminals 30 and 40 has its end electrically connected to the electrode body 20 inside the case 10 as described above and the other end inserted into a corresponding one of the terminal insertion holes 18 and 19 and exposed outside the closing plate 14. The positive electrode terminal 30 is preferably formed of metal with excellent conductivity, for example, aluminum or an aluminum alloy. The negative electrode terminal 40 is preferably formed of metal with excellent conductivity, for example, copper or a copper alloy.

FIG. 4 is a schematic cross-sectional view of the vicinity of the negative electrode terminal. As illustrated in FIGS. 2 and 4, the negative electrode terminal 40 has an external connection portion 41, a pedestal portion 42, and an electrode body connection portion 43. The negative electrode terminal 40 may have a shaft portion, not illustrated, between the external connection portion 41 and the pedestal portion 42. In the following, a description will be given on the negative electrode terminal 40 as the electrode terminal and the insulating member 50 on the negative electrode terminal 40 side as the insulating member by way of example, but such a description is not intended to limit the application of the technology disclosed herein to the structure on the negative electrode terminal side. That is, the technology disclosed herein includes an embodiment including a positive electrode terminal that has a configuration substantially similar to that of the negative electrode terminal 40 described below.

As illustrated in FIG. 4, the external connection portion 41 is configured to be large enough to be inserted into the terminal insertion hole 19. An upper end portion of the external connection portion 41 is arranged such that it is exposed to the outside of the case 10. The external connection portion 41 is provided above the pedestal portion 42. The pedestal portion 42 is formed in a plate shape here. The pedestal portion 42 is arranged inside the case 10. The outer shape of the pedestal portion 42 is configured to be larger than that of the terminal insertion hole 19. The electrode body connection portion 43 is arranged inside the case 10. The electrode body connection portion 43 extends downward from one end of the pedestal portion 42. An end portion of the electrode body connection portion 43 is connected to the electrode body 20 (more specifically, the negative electrode sheet 24) inside the case 10. In an example illustrated in FIG. 4, the external connection portion 41 is configured to be large enough to be inserted into the terminal insertion hole 19, but the configuration of the electrode terminal is not limited thereto. For example, the electrode terminal may be configured in such a size that the electrode body connection portion 43 and the pedestal portion 42 can be inserted through the terminal insertion hole 19.

The insulating member 50 is disposed between the closing plate 14 and each of the positive and negative electrode terminals 30 and 40 and prevents conduction between the closing plate 14 and each of the positive and negative electrode terminals 30 and 40. The insulating member 50 is mainly composed of a resin material. Examples of the resin material include fluorinated resins such as perfluoroalkoxy fluorinated resin (PFA), polyphenylene sulfide resin (PPS), aliphatic polyamide, and the like. Among these, it is preferred that the insulating member 50 is mainly composed of PPS. In addition to the resin materials such as PFA and PPS described above, an inorganic filler and the like may be added to the insulating member 50. Inorganic fillers suitable for use can be inorganic oxides or glass having insulating properties. Specifically, inorganic fillers include alumina, magnesia, silica, titania, and the like. The phrase "A is mainly composed of B" means that B is the predominant component on a weight basis among the components constituting A.

As illustrated in FIG. 4, the insulating member 50 has a cylindrical portion 51 and a flange portion 52. The cylindrical portion 51 and the flange portion 52 are formed integrally. The cylindrical portion 51 is located between the external connection portion 41 and the terminal insertion hole 19. The cylindrical portion 51 insulates the negative electrode terminal 40 from the terminal insertion hole 19. An upper end portion of the cylindrical portion 51 is exposed to the outside of the case 10. The flange portion 52 extends from the cylindrical portion 51 in the horizontal direction along an inner surface 14B of the closing plate 14. The flange portion 52 insulates the inner surface 14B of the closing plate 14 from the pedestal portion 42. The outer shape of the flange portion 52 is configured to be larger than the outer shape of the pedestal portion 42.

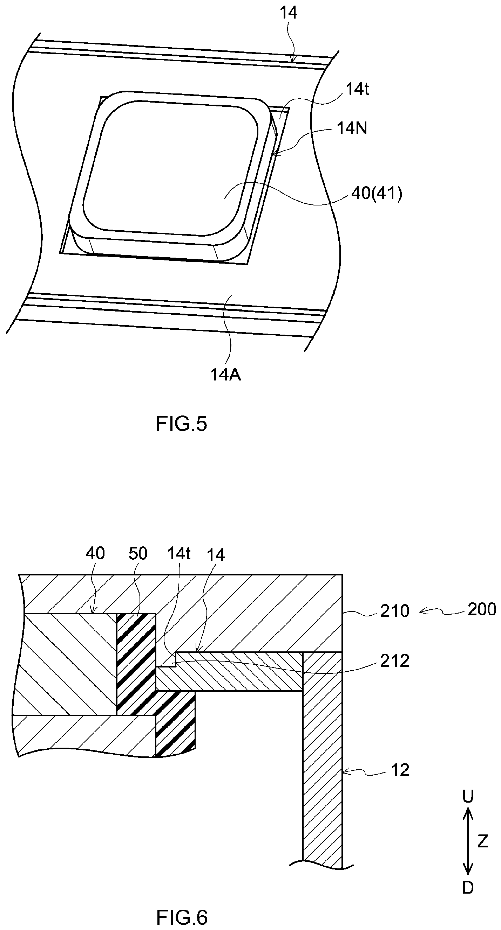

FIG. 5 is an enlarged perspective view of the surroundings of the negative electrode terminal 40. As illustrated in FIGS. 3 to 5, the electricity storage device 100 disclosed herein has grooves 14t at boundary portions 14N with the insulating members 50 on the outer surface side of the closing plate 14. Each groove 14t is provided over the entire periphery of each of the electrode terminals (positive electrode terminal 30 and negative electrode terminal 40). With such a configuration, the electricity storage device 100 with more safety can be provided. As will be described in detail later, the insert-molding is performed by setting each member in a mold and pouring molten resin into the mold. At this time, a small gap exists between respective components due to part tolerances. The molten resin tends to flow into such a small gap. Then, it leaks out into unintended places, causing a resin burr (also simply referred to as a "burr") after cooling. The molten resin tends to lead out to unintended places, especially between the electrode terminal and each of the terminal insertion holes 18 and 19 of the closing plate 14, and thus burrs may be caused over a wide area even when the electrode terminals and the like are fixed onto the mold. If such a burr is present, the burr may burn when welding the closing plate 14 and the exterior body 12, and furthermore, the insulating member 50 may also burn. For this reason, in the electricity storage device 100 disclosed herein, the closing plate 14 has the grooves 14t as described above. By providing the groove 14t, there is room for the molten resin to flow into the groove 14t, which can prevent the molten resin from spreading beyond the groove 14t onto the outer surface 14A of the closing plate 14. Thus, burrs are prevented from being caused over a wide area of the outer surface 14A of the closing plate 14 after the insert-molding. With such a configuration, the insulating member 50 can be prevented from being burnt, thereby providing the electricity storage device 100 with more safety.

The groove 14t only needs to be configured such that even when molten resin flows into the groove 14t, burrs are not caused on the outer surface 14A of the closing plate 14 beyond the groove 14t. The groove 14t is located on the outer surface 14A side of the closing plate 14. The groove 14t is a concave portion recessed from the outer surface 14A of the closing plate 14 to the inner surface 14B. The groove 14t here has a rectangular cross section. Here, sidewalls of the groove 14t are perpendicular to the bottom surface of the groove 14t. However, the cross-sectional shape of the groove 14t may be polygonal or semicircular.

The groove 14t is continuously formed in a substantially annular shape along the boundary portion 14N between the closing plate 14 and the insulating member 50 in planar view. The groove 14t is formed in a substantially rectangular shape over the entire periphery of the electrode terminal (here, the negative electrode terminal 40) as illustrated in FIG. 5. This can prevent molten resin from leaking out from between the electrode terminal and the terminal mounting hole 19 and causing burrs in unintended locations. The groove 14t is preferably provided substantially evenly with respect to the center of the electrode terminal.

Although not particularly limited, the groove 14t is preferably configured such that the sum of a groove width X and a groove depth Y is 1 mm or more when the groove width is X mm and the groove depth is Y mm. That is, the cross-sectional shape of the groove 14t is preferably configured such that the formula of (X + Y) ≥ 1 is satisfied. Thus, even if the molten resin leaks out, it does not spread beyond the groove 14t, thus preventing occurrence of burrs on the outer surface 14A of the closing plate 14. The sum of the groove width X and the groove depth Y is, for example, preferably 3 mm or less, and may be 2.5 mm or less. This ensures that the strength of the closing plate 14 is sufficiently secured.

The groove depth Y of the groove 14t is a predetermined depth, so that the molten resin can be suitably housed in the groove 14t even when it leaks out of the mold. Although not particularly limited, the groove depth Y of the groove 14t is preferably 0.1 mm or more. According to the results of the inventors' studies, a thickness tolerance of the closing plate 14 is less than 0.1 mm. Thus, by setting the groove depth Y to 0.1 mm or more, the molten resin can be sufficiently prevented from leaking out to the outer surface 14A of the closing plate 14 beyond the groove 14t. In particular, by performing insert-molding using a mold having a protruding portion as described later, the molten resin can be suitably prevented from leaking out of the groove 14t. Although the upper limit of the groove depth Y of the groove 14t is not particularly limited, it is preferably less than or equal to 1/2 of the thickness t of the closing plate 14 and may be less than or equal to 1/3 thereof. More specifically, it is preferably 1 mm or less and may be 0.7 mm or less, or 0.5 mm or less. The groove depth Y refers to the length in the up-down direction Z from the top end to the bottom end of the groove 14t.

The groove depth Y of the groove 14t has a predetermined length, thereby enabling prevention of molten resin from leaking out to the outer surface 14A of the closing plate 14. The groove width X is, for example, preferably 0.1 mm or more and may be 0.5 mm or more. This can sufficiently secure a space to house the molten resin. On the other hand, in a case where the groove 14t is too wide, the strength of the closing plate 14 may be reduced, or the adhesion strength between the electrode terminal and the closing plate 14 may be reduced. From this point of view, the groove width X is preferably 2 mm or less and more preferably 1.5 mm or less. The groove width X is the length in the short side direction X and in the long side direction Y

In one preferred embodiment, the insulating member 50 is not disposed on the outer surface 14A of the closing plate 14 (more particularly, the outer surface 14A excluding the groove 14t). Thus, the insulating member 50 can be suitably prevented from being burnt during welding and the like. The insulating member 50 may or may not be disposed in the groove 14t. Preferably, as illustrated in FIG. 4, it is preferred that the insulating member 50 is not disposed in the groove 14t. An electricity storage device 100 in which the insulating member 50 is not disposed in the groove 14t can be manufactured, for example, by performing insert-molding using the mold having the protruding portion described later.

Preferably, at least a part of the surface of the closing plate 14 in contact with the insulating member 50 is subjected to a roughening treatment. The roughening treatment is a surface treatment that involves forming asperities on a surface to increase the surface area and enhance an anchor effect, thereby improving bonding and adhesiveness with the insulating member 50. The roughening treatment can be performed, for example, by laser irradiation or sandblasting. The part of the closing plate 14 subjected to the roughening treatment constitutes a roughened portion 14s (see FIG. 4). The closing plate 14 preferably has the roughened portion 14s in at least a part of the boundary portion 14N with the insulating member 50.

The roughened portion 14s is preferably disposed so as to block a leakage path of the electrolyte (i.e., a path where the electrolyte leaks out from the inside of the electricity storage device 100). Here, the roughened portion 14s is provided, for example, on the inner surface 14B around the terminal insertion hole 19 and on a side surface 14c that constitutes the terminal insertion hole 19 and contacts the insulating member 50. The roughened portion 14s on the inner surface 14B of the closing plate 14 is preferably provided over an entire area surrounding the terminal insertion hole 19. Although not particularly limited, a width Wi of the roughened portion 14s on the inner surface 14B of the closing plate 14 is preferably 1 mm or more, and more preferably 3 mm or more. Thus, the adhesion strength between the closing plate 14 and the insulating member 50 is increased, enabling tighter sealing therebetween. More preferably, the closing plate 14 has the roughened portion 14s over the entire region of the surface in contact with the insulating member 50.

Although not particularly limited, at least a part of the surface of the electrode terminal in contact with the insulating member 50 is preferably subjected to a roughening treatment, as in the roughened portion 14s of the closing plate 14. As illustrated in FIG. 4, a portion of the electrode terminal (here, negative electrode terminal 40) subjected to the roughening treatment constitutes a roughened portion 40s. The negative electrode terminal 40 preferably has the roughened portion 40s in at least a part of a boundary portion 40N with the insulating member 50.

Similar to the roughened portion 14s described above, the roughened portion 40s of the negative electrode terminal 40 is preferably disposed to block the leakage path of the electrolyte. Here, the roughened portion 40s is provided on a side surface 41c of the external connection portion 41 and on a top surface 42a of the pedestal portion 42. A length Li of the roughened portion 40s provided on the side surface 41c of the external connection portion 41 is, for example, preferably 1 mm or more along the side surface 41c and may be 3 mm or more. A length L₂ of the roughened portion 40s provided on the top surface 42a of the pedestal portion 42 is, for example, preferably 1 mm or more along the top surface 42a, and may be 3 mm or more. Thus, the adhesion strength between the electrode terminal and the insulating member 50 becomes higher, thereby enabling tighter sealing therebetween. More preferably, the electrode terminal has the roughened portion 40s on the entire region of the surface in contact with the insulating member 50.

Both the closing plate 14 and the electrode terminal may have the roughened portion 14s and the roughened portion 40s. Thus, the closing plate 14, the electrode terminals, and the insulating member 50 are sealed more tightly, which realizes the electricity storage device 100 with more safety.

### <Method of Manufacturing Electricity Storage Device>

Subsequently, an example of a method of manufacturing the electricity storage device 100 will be described. The manufacturing method disclosed herein includes, for example, (1) a preparing step and (2) a closing step. Here, (1) the preparing step includes (1A) an insert-molding step.
(1) In the preparing step, at least the exterior body 12, the closing plate 14, the positive electrode terminal 30, the negative electrode terminal 40, and the electrode body 20 are prepared. Here, the closing plate 14 provided with grooves 14t around the terminal insertion holes 18 and 19 is prepared.
(1A) In the insert-molding step, the closing plate 14, the positive electrode terminal 30, the negative electrode terminal 40, and the insulating member 50 are integrated to form an assembly component (e.g., closing plate assembly 60). The closing plate assembly 60 can be produced by insert-molding the closing plate 14, the positive electrode terminal 30, the negative electrode terminal 40, and the insulating member 50. This can reduces the number of components and can also simplify a conduction path, compared to a conventional method using rivets. Insert-molding can be performed according to conventionally known methods, as described, for example, in Japanese Patent Application Publication No. 2021-086813, Japanese Patent Application Publication No. 2021-086814, Japanese Patent Publication No. 03986368, Japanese Patent Publication No. 6648671, and the like. For example, the insert-molding step can be performed using a molding die having an upper mold and a lower mold by a method including a component setting step, a positioning step, an upper mold setting step, an injection molding step, an upper mold releasing step, and a component removing step.

The component setting step involves inserting the positive electrode terminal 30 and the negative electrode terminal 40 through the terminal insertion holes 18 and 19 of the closing plate 14, respectively, and then placing the closing plate 14 in the lower mold. The positioning step involves positioning the positive electrode terminal 30 and the negative electrode terminal 40 such that they are fixed. The upper mold setting step involves placing the upper mold such that the closing plate 14 and the positive and negative electrode terminals 30 and 40 are sandwiched between the upper and lower molds in the up-down direction. The injection molding step first involves heating the molding die. The injection molding step then involves injecting molten resin into the molding die. The molten resin flows from the upper mold to the lower mold through the terminal insertion holes 18 and 19. The injection molding step subsequently involves cooling the molding die and a resulting molded article. The insulating member 50, the closing plate 14, and the electrode terminals are thus integral with each other. The upper mold releasing step involves separating the upper mold from the lower mold. The component removing step involves removing the molded article from the lower mold.

FIG. 6 is a diagram schematically illustrating how the injection molding step is performed. As illustrated in FIG. 6, an upper mold 210 of a molding die 200 may have a protruding portion 212 that can be inserted into the groove 14t described above. By performing the injection molding step with the protruding portion 212 of the upper mold 210 inserted into the groove 14t, the molten resin that is injected can be prevented from protruding from the groove 14t and adhering to the outer surface 14A of the closing plate 14. Thus, the occurrence of burrs can be further reduced. Although not particularly limited, the length of the protruding portion 212 in the up-down direction Z is 0.05 mm to 0.3 mm (preferably, 0.1 mm). As described above, since the thickness tolerance of the closing plate 14 is less than 0.1 mm, the protruding portion 212 having a length in the above range allows for the thickness tolerance of the closing plate 14. Thus, the injection molding step can be performed in a state where the upper mold 210 adheres to the closing plate 14, thereby more suitably preventing the molten resin from leaking out.

(2) The closing step involves sealing the exterior body 12 and the closing plate assembly 60 in a state where the electrode body 20 and the electrolyte are housed in the exterior body 12. Specifically, first, the electrode body connection portion 43 of the closing plate assembly 60 is connected to the electrode body 20. The electrode body 20 is then inserted through the opening 12h of the exterior body 12, and the periphery of the closing plate 14 of the closing plate assembly 60 and the periphery of the opening 12h of the exterior body 12 are joined together by laser welding or the like. The electrolyte is then injected through the pouring hole 16, and the pouring hole 16 is closed with the sealing member 17, thus hermetically sealing the electricity storage device 100. In this manner, the electricity storage device 100 can be manufactured. In the electricity storage device 100 disclosed herein, the closing plate 14 has the groove 14t, thereby reducing the occurrence of burrs. Thus, even if welding is performed in the closing plate, the burrs do not burn out. Therefore, the electricity storage device 100 with more excellent safety can be provided.

### <Applications of Battery>

The electricity storage device 100 is usable for various applications. The electricity storage device 100 is suitably usable as a motor power source (e.g., a driving power source) to be installed on vehicles, such as passenger cars and trucks. The vehicle is not limited to a particular type, and may be, for example, a plug-in hybrid electric vehicle (PHEV), a hybrid electric vehicle (HEV), or a battery electric vehicle (BEV). The electricity storage device 100 can be suitably used to configure a battery assembly because of its improved safety.

Several embodiments of the present disclosure have been described above, but these embodiments are illustrative only. The present disclosure can be implemented in various other embodiments. The present disclosure can be implemented on the basis of the disclosure of the present specification and common technical knowledge in the relevant field. The technology described in the scope of claims encompasses various modifications and alterations of the embodiments illustrated above. For example, a part of the aforementioned embodiment can be replaced by another modified aspect, and the other modified aspect can be added to the aforementioned embodiment. Moreover, a given technical feature may be expunged as appropriate if the feature is not explained as essential.

As described above, the specific aspects of the technology disclosed herein are those described in the following respective items.
Item 1: An electricity storage device comprising: an electrode body including a positive electrode and a negative electrode; a case having an opening and housing the electrode body therein; a closing plate having a terminal insertion hole and closing the opening; an electrode terminal having one end electrically connected to the electrode body inside the case and the other end inserted into the terminal insertion hole and exposed outside the closing plate; and an insulating member made of resin and insulating the electrode terminal from an outer surface of the closing plate, wherein the closing plate, the electrode terminal, and the insulating member are insert-molded, the closing plate has a groove at a boundary portion with the insulating member on the outer surface side, and the groove is provided over an entire periphery of the electrode terminal.
Item 2: The electricity storage device according to Item 1, wherein, when a groove width is X mm and a groove depth is Y mm, the groove has a sum of the groove width X and the groove depth Y of 1 mm or more.
Item 3: The electricity storage device according to Item 2, wherein the groove depth Y is 0.1 mm or more.
Item 4: The electricity storage device according to any one of Items 1 to 3, wherein the closing plate has a roughened portion in at least a part of the boundary portion with the insulating member.
Item 5: The electricity storage device according to any one of Items 1 to 4, wherein the electrode terminal has a roughened portion in at least a part of the boundary portion with the insulating member.

### REFERENCE SIGNS LIST

- 10: case
- 12: exterior body
- 12a: bottom wall
- 12b: long side wall
- 12c: short side wall
- 12h: opening
- 14: closing plate
- 14A: outer surface
- 14B: inner surface
- 14c: side surface
- 14N: boundary portion
- 14s: roughened portion
- 14t: groove
- 15: gas discharge valve
- 16: pouring hole
- 17: sealing member
- 18: terminal insertion hole
- 19: terminal insertion hole
- 20: electrode body
- 22: positive electrode sheet (positive electrode)
- 24: negative electrode sheet (negative electrode)
- 30: positive electrode terminal (electrode terminal)
- 40: negative electrode terminal (electrode terminal)
- 40N: boundary portion
- 40s: roughened portion
- 41: external connection portion
- 41c: side surface
- 42: pedestal portion
- 42a: top surface
- 43: electrode body connection portion
- 50: insulating member
- 51: cylindrical portion
- 52: flange portion
- 60: closing plate assembly
- 70: separator sheet
- 100: electricity storage device
- 200: molding die
- 210: upper mold
- 212: protruding portion

## Claims

1. An electricity storage device (100) comprising:
an electrode body (20) including a positive electrode (22) and a negative electrode (24);
an exterior body (12) having an opening (12h) and housing the electrode body (20) therein;
a closing plate (14) having a terminal insertion hole (18, 19) and closing the opening (12h);
an electrode terminal (30, 40) having one end electrically connected to the electrode body (20) inside the exterior body (12) and another end inserted into the terminal insertion hole (18, 19) and exposed outside the closing plate (14); and
an insulating member (50) made of resin and insulating the electrode terminal (30, 40) from an outer surface (14A) of the closing plate (14), wherein
the closing plate (14), the electrode terminal (30, 40), and the insulating member (50) are insert-molded,
the closing plate (14) has a groove (14t) at a boundary portion with the insulating member (50) on the outer surface (14A) side, and
the groove (14t) is provided over an entire periphery of the electrode terminal (30, 40).

2. The electricity storage device (100) according to claim 1, wherein,
when a groove width is X mm and a groove depth is Y mm, the groove (14t) has a sum of the groove width X and the groove depth Y of 1 mm or more.

3. The electricity storage device (100) according to claim 2, wherein,
the groove depth Y is 0.1 mm or more.

4. The electricity storage device (100) according to any one of claims 1 to 3, wherein
the closing plate (14) has a roughened portion (14s) in at least a part of the boundary portion with the insulating member (50).

5. The electricity storage device (100) according to any one of claims 1 to 4, wherein
the electrode terminal(30, 40) has a roughened portion (14s) in at least a part of the boundary portion with the insulating member (50).
